# EUROPEAN PATENT SPECIFICATION

(11) **EP 0 530 480 B1**
(45) Date of publication and mention of the grant of the patent: **27.12.1995**
(21) Application number: 92112399.8
(22) Date of filing: 20.07.1992
(51) Int. Cl.: H02K 5/24, F16F 1/12

(54) **A stamping method for producing a support member, in particular for the usual suspensions of an electric motor in a hermetic motor-compressor unit, and the support member produced**
Stanzverfahren zur Herstellung eines Halterungselements, insbesondere für die übliche Aufhängung eines elektrischen Motors in einer hermetischen Motor-Komressor-Einheit, und das hergestellte Halterungselement
Méthode de poinçonnage pour produire un élément de support, en particulier pour la suspension usuelle d'un moteur électrique dans un ensemble hermétique d'un moteur-compresseur, et l'élément de support produit

(30) Priority: 22.07.1991 IT MI912020
(43) Date of publication of application: 10.03.1993
(73) Proprietor: WHIRLPOOL EUROPE B.V., 5507 SK Veldhoven (NL)
(72) Inventor: Bianchi, Vittorio, I-21025 Comerio (VA) (IT)
(74) Representative: Saconney, Piero

(56) References cited:
- EP-A- 0 027 247
- GB-A- 771 194
- US-A- 4 793 597
- 903 MACHINE DESIGN (TECH BRIEFS) vol. 47, no. 26, 13 November 1975; F. STRASSER : "3-D Stampings"

## Description

This invention relates to a method for producing a support member for the usual suspensions of an electric motor in a hermetic motor-compressor unit, and the support member obtained.

A hermetic motor-compressor unit, particularly for use in a refrigerator or the like, comprises a casing containing a compressor frame or bracket for supporting a usual electric motor provided with a stator and rotor, and a cylinder in which a piston moves driven by a drive shaft, the compressor head being located in a position corresponding with said cylinder.

The compressor frame, the electric motor and the cylinder consequently form a single assembly which is arranged on dampers, generally in the form of springs resting on support members generally fixed to a base part within said casing.

These support members are generally pins formed by machine-upsetting a tube piece or a bar, and are fixed to the base part of the casing by welding or a similar operation.

This method of forming said pins requires considerable time and energy, which negatively influence the cost of the support member and of the motor-compressor unit itself.

In addition, it can happen that in the long term the stress to which said pins are subjected during the operation of the motor-compressor unit can cause them to separate from the unit casing, with obvious drawbacks.

GB-A-771194 discloses a hermetic motor-compressor unit comprising a casing formed by a cylindrical body which is closed at the top and bottom by an end cover. The motor compressor assembly is supported on springs whose ends are engaged by frusto-conical projections which are formed integral with the end covers of the casing.

The technical publication 903 Machine Design, vol. 47, no.26, page 143 discloses a method for forming a variety of 3-dimensional objects.

An object of the present invention is to provide a simple and quick method for forming the support members for said dampers.

A further object of the invention is to provide a method for forming said support members by which the members are as identical as possible, are free of burrs and working imperfections, and are economically more advantageous than the state of the art.

A further object is to provide a support member of the aforesaid type which is of high mechanical strength and which can be fixed easily and quickly to the casing of the motor-compressor unit.

A further object is to provide a support member of the aforesaid type which can directly engage the end of the spring without having to interpose special pieces such as plastic caps.

A further object is to provide a support member of the stated type which is of low cost compared with analogous members of the state of the art.

A further object is to provide a support member of the stated type which can be easily and reliably coupled to the relative damper. A further object is to provide a support member which is light, and is easily transported and stored.

These and further objects which will be apparent to the expert of the art are attained by a method for producing a support member, in particular for the usual suspensions of an electric motor and related parts of a motor-compressor unit of the stated type, comprising the steps of stamping from a metal plate a flat body provided with a central part from which arms extend spoke-like, deep-drawing said central part to form a hollow frusto-conical body and bending said arms so that the longitudinal axes of these latter lie parallel to a longitudinal axis of the deep-drawn part.

Said method provides a support member, in particular for suspensions of an electric motor and related parts of a motor-compressor unit, characterised by comprising a substantially frusto-conical hollow body with an aperture at one end, said aperture being delimited by an at least partly projecting edge from which there extend arms having their longitudinal axes substantially parallel to a longitudinal axis of the frusto-conical body, said arms being arranged to cooperate with corresponding seats provided in the casing of the motor-compressor unit.

The present invention will be more apparent from the accompanying drawing, which is provided by way of non-limiting example and in which:
Figure 1 is a cross-section through a motor-compressor unit provided with support members according to the invention;
Figure 2 is an exploded perspective view of a member constructed in accordance with the invention, during its connection to other parts of the motor-compressor unit;
Figure 3 is a top view of the member of Figure 2;
Figure 4 is a section on the line 4-4 of Figure 2;
Figure 5 shows the member of Figure 2 during a stage of its construction; and
Figure 6 shows the member of Figure 2 during a further stage of its construction.

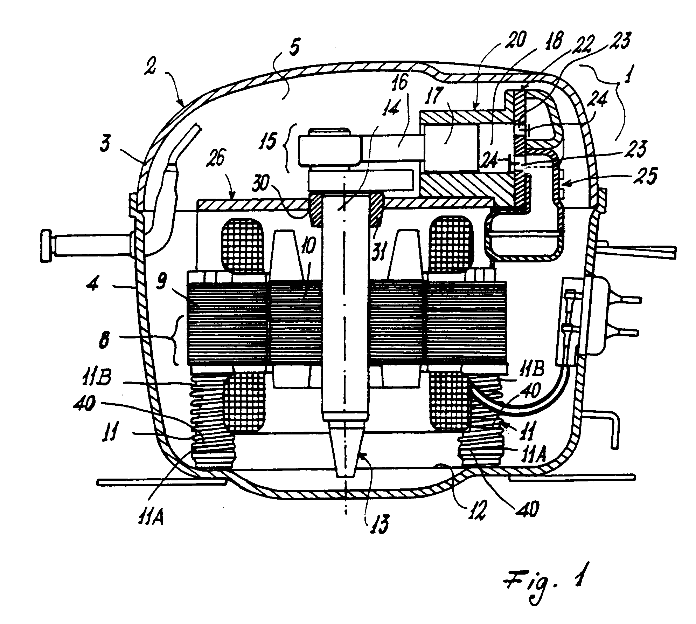

With reference to said Figure 1, a motor-compressor unit is indicted by 1 and comprises a casing defined by two half-casings 3 and 4 fixed together in any known manner.

An electric motor 8 comprising a usual stator 9 and rotor 10 is contained in a cavity 5 defined by said casing 2.

The motor rests in any known manner on spring dampers 11 which themselves rest on a base part 12 of the half-casing 4.

The motor 8 rotates an output shaft (or drive shaft) 13. The upper end 14 of this latter is associated in known manner with a crank mechanism 15 comprising a connecting rod 16 operating on a usual piston 17 movable within the bore 18 of a cylinder 20 so as to compress a fluid, for example a refrigerant fluid, of a refrigerator in which the motor-compressor unit is used.

At one end of said bore there is a valve plate 22 provided with ports 23 on which usual valves 24 are arranged.

A compressor head 25 is arranged on the valve plate 22.

The end 14 of the shaft 13 is associated with a compressor frame 26 to which the cylinder 20 is fixed in known manner.

Alternatively, this latter is formed within said frame 26 by casting.

The frame 26 is fixed in any known manner to the motor 8 and comprises an aperture 30 through which the shaft 13 passes.

Within the aperture there is a usual bearing 31 or similar mechanical disengagement member. The bearing 31 is arranged in contact with the end 14 of the shaft 13.

As stated, the motor 8 together with the frame 26 and cylinder 20 rest on spring dampers 11.

These latter cooperate with corresponding support members 40 associated with the base part 12 of the half-casing 4.

More specifically, each of said members 40 is formed by stamping a metal plate followed by further operations, as described hereinafter.

The support member 40 comprises a substantially frusto-conical body 41 with an internal cavity 42. This latter opens to the outside of the body 41 via an aperture 43 delimited by an edge 44.

This latter comprises parts 45 of circular sector shape advantageously extending along a circular arc of 60°; between each circular sector part 45 and the next there is a gap 46 also extending through an circular arc of 60°. Each part 45 lies substantially in a plane perpendicular to the axis W of the member 40

The circular sectors 45 serve as a support for the spring to be mounted over the support member 40 until it abuts against the sectors 45.

From the edge 44 there extend arms 48 each with its longitudinal axis K parallel to said axis W.

The arms 48 extend from said edge at the gaps 46 present between the circular sector parts 45, and are therefore equiangularly spaced apart.

Each arm 48 is arranged to cooperate with a corresponding seat 50 provided in the base part 12 of the half-casing 4, and into which said arm is inserted and fixed by adhesive, welding or another mechanical operation.

Finally, at its free end 51 each arm 48 comprises a projection 52 arranged to cooperate with its own seat 53 within said seat 50, to provide better engagement between the support member 40 and the casing 2. The projections 52 on the arms 48 also facilitate and guide the insertion of the arms into the respective seats 53.

As stated, each support member is formed by stamping a metal plate.

With reference to Figure 5, the said stamped member 40 is initially flat and comprises a central part 60 from which the portions 48A which are to become the arms 48 extend spoke-like.

The central part 60 is then deep-drawn to form the body 41 (see Figure 6). During this stage in the construction of the member 40, the spoke portions 48A are arranged with their axes F perpendicular to the axis W of the deep-drawn body 41.

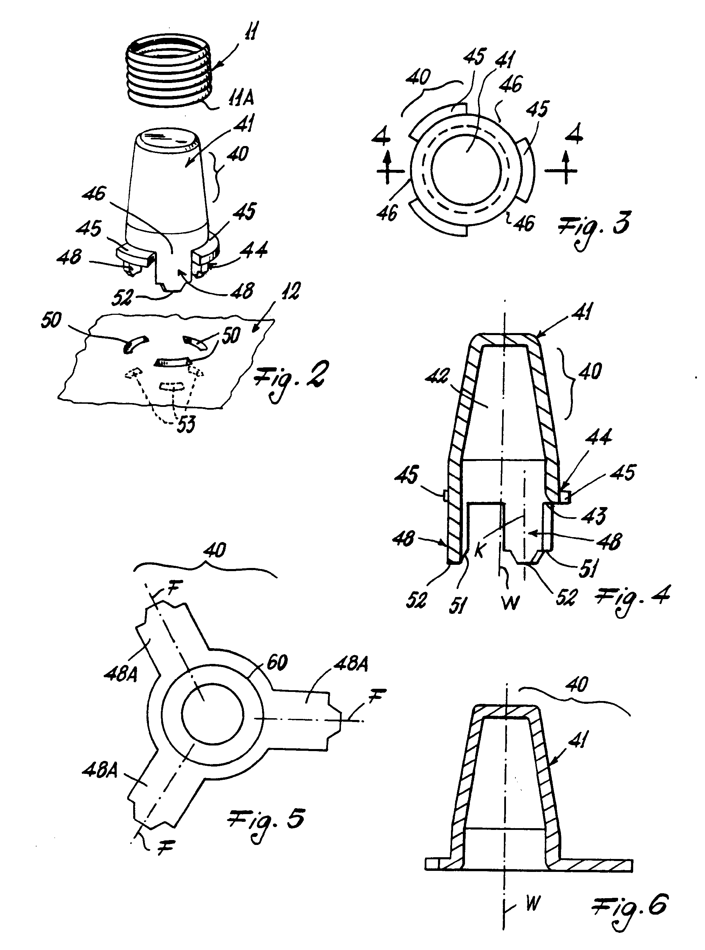

The portions 48A are then bent to make them assume the final configuration of the arms 48 shown in Figures 2 and 4.

The circular sector parts 45 of the edge 44 are defined during this bending, by advantageously pre-cutting the edges of the arms 48 adjacent to said parts 45 and bending the arms back while keeping said parts clamped.

Having formed the member 40 by this method, it is associated with the base part 12 of the casing 2 in which the seats 50 and 53 have been previously formed.

This is achieved by inserting the arms 48 into the seats 50 until the projections 52 attain their seats 53.

After fixing the member 40 to the casing 2 (by any known method), the relative spring damper 1 is mounted on it so that with said member in position its lower end 11A (with reference to figure 2) rests on the circular sector parts 45. The motor 8 and the parts 20 associated with it are then arranged in any known manner on the opposite end 11B of each spring 11.

The described method for forming a support member enables this latter to be constructed easily and quickly. In addition, the support members obtained by this method are totally identical to each other, and are free from burrs and imperfections, in contrast to the support members of the state of the art obtained by the usual methods.

A support member formed in accordance with the invention can be easily fixed to the casing of the motor-compressor unit, with the result that its assembly is simplified and made more rapid.

In addition, such a member is mechanically strong and reliable in use.

## Claims

1. A method for producing a support member, in particular for the usual suspensions of an electric motor of a hermetic motor-compressor unit, in particular for use in a refrigerator or the like, such method comprising the steps of stamping from a metal plate a flat body provided with a central part (60) from which arms (48A) extend spoke-like, deep-drawing said central part (60) to form a hollow frusto-conical body (41) and bending said arms (48A) so that the longitudinal axes (F) of these latter lie parallel to a longitudinal axis (W) of the deep-drawn part.

2. A method as claimed in claim 1, comprising the steps of pre-cutting the edges of the arms (48) before said bending, circular sector parts (45) of the edge (44) being defined during said bending, said parts (45) lying substantially in a plane perpendicular to the axis (W) of the deep-drawn part (40).

3. A support member (40), in particular for the usual suspensions of an electric motor (8) of a hermetic motor-compressor unit (1), particularly for use in a refrigerator or the like, the hermetic motor-compressor unit (1) comprising a casing (3, 4) containing a compressor frame or bracket (26) for supporting a usual electric motor (8) provided with a stator (9) and rotor (10), and a cylinder (20) in which a piston (17) moves driven by a drive shaft (13), a compressor head (25) being located in a position corresponding with said cylinder (20), and wherein said motor (8), the compressor frame (26) and the cylinder (20) are associated with and supported by said suspensions (11), said support member (40) comprising a substantially frusto-conical hollow body (41) with an aperture (43) at the wider end, characterised in that said aperture (43) is delimited by an at least partly projecting edge (44) from which there extend arms (48) having their longitudinal axes (K) parallel to a longitudinal axis (W) of the frusto-conical body (41), said arms (48) being arranged to cooperate with corresponding seats (50) provided in the casing (2) of the motor-compressor unit (1) to fix the support member (40) to the casing (2).

4. A support member as claimed in claim 3, characterised in that the edge (44) at the aperture (43) of the frusto-conical body (41) comprises at least two projecting parts (45) arranged in a plane perpendicaular to the longitudinal axis (W) of said boby.

5. A support member as claimed in claim 3, characterised in that the arms (48) extend from the respective regions of said edge (44) which lie between projections (45) of this latter.

6. A support member as claimed in claim 3, characterised in that each arm (48) extending from the edge (44) of the frusto-conical body (41) comprises at its free end (51) a projection (52) which acts at leasts as a guide for the insertion of said arm (48) into the respective seat (50), said seat being formed in a base part (12) of a portion (4) of the casing (2) of the motor-compressor unit.

7. A support member as claimed in claim 4, characterised in that the arms (48) projecting form the edge (44) of the frusto-conical body (41) are three in number and are spaced equally apart, said arms (48) extending from said edge at gaps (46) between the projecting regions (45) of said edge, said projecting regions being of circular sector shape and extending along circular arcs advantageously of 60°.

## Patentansprüche

1. Eine Methode zur Herstellung eines Stützteiles, insbesondere für die herkömmlichen Aufhängungen eines elektrischen Motors einer hermetischen Motorverdichtereinheit, insbesondere für die Verwendung in einem Kühlschrank od.dgl., welche die Schritte aufweist, von einer Metallplatte einen flachen Körper mit einem zentralen Teil (60), von dem Arme (48A) speichenartig ausgehen, auszustanzen, diesen zentralen Teil (60) zur Bildung eines hohlen, kegelstumpfförmigen Körpers (41) tiefzuziehen, und besagte Arme (48A) so zu biegen, daß die longitudinalen Achsen (F) dieser letzeren parallel zu einer longitudinalen Achse (W) des tiefgezogenen Teiles liegen.

2. Eine Methode nach Anspruch 1, welche die Schritte aufweist, die Ränder der Arme (48) vor dem besagten Biegen vorzuschneiden, wobei kreisausschnittförmige Teile (45) des Randes (44) während dem besagten Biegen festgelegt werden und diese Teile (45) im wesentlichen in einer Ebene senkrecht zur Achse (W) des tiefgezogenen Teiles (40) liegen.

3. Ein Stützteil (40), insbesondere für die herkömmlichen Aufhängungen eines elektrischen Motores (8) einer hermetischen Motorverdichtereinheit (1), insbesondere für die Verwendung in einem Kühlschrank od.dgl., wobei die hermetische Motorverdichtereinheit (1) ein Gehäuse (3,4), welches einen Kompressorrahmen oder -träger (26) zum Tragen eines herkömmlichen elektrischen Motors (8), der mit einem Stator (9) und Rotor (10) ausgestattet ist, und einen Zylinder (20), in dem sich ein von einer Antriebswelle (13) angetriebener Kolben (17) bewegt, aufweist, ein Verdichterkopf (25) einer mit dem Zylinder (20) korrespondierenden Position angeordnet ist, der Motor (8), der Kompressorrahmen (26) und der Zylinder (20) mit den besagten Aufhängungen (11) in Verbindung stehen und von diesem abgestützt werden und das Stützteil (40) einen im wesentlichen kegelstumpfförmigen Körper (41) mit einer Öffnung (43) am breiteren Ende aufweist, dadurch gekennzeichnet, daß diese Öffnung (43) von einem zumindest teilweise vorspringenden Rand (44) begrenzt ist, von dem aus sich Arme (48) erstrecken, deren longitudinalen Achsen (K) parallel zu einer longitudinalen Achse (W) des kegelstumpfförmigen Körpers (41) sind, wobei diese Arme (48) derart angeordnet sind, daß sie mit entsprechenden Aufnahmen (50) zusammenwirken, mit welchen das Gehäuse (2) der Motorverdichtereinheit (1) zur Befestigung des Stützteiles (40) am Gehäuse (2) versehen ist.

4. Stützteil nach Anspruch 3, dadurch gekennzeichnet, daß der Rand (44) der Öffnung (43) des kegelstumpffoermigen Koerpers (41) zumindest zwei vorspringende Teile (45) aufweist, welche in einer Ebene senkrecht zur longitudinalen Achse (W) des besagten Körpers angeordnet sind.

5. Stützteil nach Anspruch 3, dadurch gekennzeichnet, daß die Arme (48) sich von jeweiligen Bereichen des Randes (44) erstrecken, welche zwischen Vorsprüngen (45) dieses letzteren liegen.

6. Stützteil nach Anspruch 3, dadurch gekennzeichnet, daß jeder der sich vom Rand (44) des kegelstumpfförmigen Körpers (41) erstreckenden Arme (48) an seinem freien Ende (51) einen Vorsprung (52) aufweist, der zumindest als Führung für das Einsetzen dieses Armes (48) in die jeweilige Aufnahme (50) dient, welche in einem Bodenteil (12) eines Teiles (4) des Gehäuses (2) der Motorverdichtereinheit ausgebildet ist.

7. Stützteil nach Anspruch 4, dadurch gekennzeichnet, daß die Arme (48), welche sich vom Rand (44) des kegelstumpfförmigen Körpers (41) vorragen, drei in ihrer Zahl sind und gleich weit voneinander beabstandet sind, wobei die Arme (48) sich von diesem Rand bei Zwischenräumen (46) zwischen den vorspringenden Bereichen (45) dieses Randes erstrecken und jene vorspringenden Bereiche die Form von Kreisausschnitten aufweisen und sich über Kreisbögen von vorzugsweise 60° erstrecken.

## Revendications

1. Procédé pour produire un élément de support, en particulier pour les suspensions habituelles d'un moteur électrique d'un ensemble hermétique moteur-compresseur, particulièrement en vue d'une utilisation dans un réfrigérateur ou autre appareil analogue, ce procédé comprenant les étapes : de découpage à la presse, dans une plaque de métal, d'un corps plat pourvu d'une partie centrale (60) à partir de laquelle des bras (48A) s'étendent à la façon de rayons ; d'emboutissage profond de ladite partie centrale (60) pour former un corps creux tronconique (41) et de pliage desdits bras (48A) de manière que les axes longitudinaux (F) de ces derniers soient parallèles à un axe longitudinal (W) de la partie qui a subi un emboutissage profond.

2. Procédé selon la revendication 1, comprenant les étapes de découpage préalable des bords des bras (48) avant ledit pliage, des parties (45), formant des secteurs circulaires, du bord (44) étant définies pendant ledit pliage, lesdites parties (45) se trouvant sensiblement dans un plan perpendiculaire à l'axe (W) de la partie (40) ayant subi un emboutissage profond.

3. Elément de support (40), en particulier pour les suspensions habituelles d'un moteur électrique (8) d'un ensemble hermétique moteur-compresseur (1), particulièrement en vue d'une utilisation dans un réfrigérateur ou autre appareil analogue, l'ensemble hermétique moteur-compresseur (1) comprenant une enveloppe (3, 4) contenant un bâti ou support (26) de compresseur pour supporter un moteur électrique habituel (8) pourvu d'un stator (9) et d'un rotor (10), et un cylindre (20) dans lequel un piston (17) se déplace en étant entraîné par un arbre d'entraînement (13), une tête (25) de compresseur étant placée dans une position correspondant audit cylindre (20), et dans lequel ledit moteur (8), le bâti (26) du compresseur et le cylindre (20) sont associés auxdites suspensions (11) et sont supportés par ces dernières, ledit élément de support (40) comprenant un corps creux sensiblement tronconique (41) muni d'une ouverture (43) à son extrémité la plus grande, **caractérisé** en ce que ladite ouverture (43) est délimitée par un bord (44) faisant saillie au moins partiellement et à partir duquel s'étendent des bras (48) dont les axes longitudinaux (K) sont parallèles à un axe longitudinal (W) du corps tronconique (41), lesdits bras (48) étant conçus de manière à coopérer avec des sièges correspondants (50) prévus dans l'enveloppe (2) de l'ensemble moteur-compresseur (1) pour fixer l'élément de support (40) à l'enveloppe (2).

4. Elément de support selon la revendication 3, **caractérisé** en ce que le bord (44), au niveau de l'ouverture (43) du corps tronconique (41), comprend au moins deux parties saillantes (45) disposées dans un plan perpendiculaire à l'axe longitudinal (W) dudit corps.

5. Elément de support selon la revendication 3, **caractérisé** en ce que les bras (48) s'étendent depuis les régions respectives dudit bord (44) qui se trouvent entre les saillies (45) de ce dernier.

6. Elément de support selon la revendication 3, **caractérisé** en ce que chaque bras (48) s'étendant depuis le bord (44) du corps tronconique (41) comprend, à son extrémité libre (51), une saillie (52) qui agit au moins comme un guide pour l'insertion dudit bras (48) dans le siège respectif (50), ledit siège étant formé dans une partie de base (12) d'une portion (4) de l'enveloppe (2) de l'ensemble moteur-compresseur.

7. Elément de support selon la revendication 4, **caractérisé** en ce que les bras (48) faisant saillie du bord (44) du corps tronconique (41) sont au nombre de trois et sont équidistants, lesdits bras (48) s'étendant depuis ledit bord, à des intervalles (46) situés entre les régions saillantes (45) dudit bord, lesdites régions saillantes ayant une forme de secteur de cercle s'étendant le long d'arcs de cercle avantageusement de 60°.
